# FASCICULE DE BREVET EUROPEEN

(11) **EP 3 963 029 B1**
(45) Date de publication et mention de la délivrance du brevet: **29.05.2024**
(21) Numéro de dépôt: 20731916.1
(22) Date de dépôt: 30.04.2020
(51) Int. Cl.: C10B 53/02, C10L 9/08, C10L 5/44

(54) **CONTROLE DU VAPOCRAQUAGE EN VUE D'AMELIORER LE PCI DES GRANULES NOIRS**
DAMPFCRACKKONTROLLE ZUR PCI-VERBESSERUNG VON SCHWARZEM GRANULAT
STEAM CRACKING CONTROL FOR IMPROVING THE PCI OF BLACK GRANULES

(30) Priorité: 03.05.2019 FR 1904682
(43) Date de publication de la demande: 09.03.2022
(73) Titulaire: Europeenne de Biomasse, 75009 Paris (FR)
(72) Inventeur: DESPRES, Jean-Luc, 51360 VERZENAY (FR); HABAS, Thomas, 75013 PARIS (FR); QUINTERO-MARQUEZ, Adriana, 78110 LE VESINET (FR); MARTEL, Frédéric, 51100 REIMS (FR)
(74) Mandataire: IP Trust
(86) Numéro de dépôt international: PCT/FR2020/050730
(87) Numéro de publication internationale: WO 2020/225505

(56) Documents cités:
- EP-A1- 2 373 767
- WO-A1-2016/163877
- US-A1- 2012 006 320
- US-A1- 2016 153 010
- US-A1- 2016 251 611
- GEIR SKJEVRAK ET AL: "Pelletizing and Combustion Behaviors of Wood Waste with Additives Mixing", POWER AND ENERGY ENGINEERING CONFERENCE (APPEEC), 2012 ASIA-PACIFIC, IEEE, 27 mars 2012 (2012-03-27), pages 1-5, XP032239507, DOI: 10.1109/APPEEC.2012.6306992 ISBN: 978-1-4577-0545-8
- HENDRIKS A T W M ET AL: "Pretreatments to enhance the digestibility of lignocellulosic biomass", BIORESOURCE TECHNOLOGY, ELSEVIER, AMSTERDAM, NL, vol. 100, no. 1, 1 janvier 2009 (2009-01-01), pages 10-18, XP025407559, ISSN: 0960-8524, DOI: 10.1016/J.BIORTECH.2008.05.027 [extrait le 2008-07-02]

## Description

La présente invention concerne le domaine de la valorisation de biomasse lignocellulosique, notamment pour la production de combustibles de type « granulés noirs » (« black pellets » en anglais) à haut pouvoir calorifique.

### Domaine technique

La transformation de biomasse lignocellulosique (bois, résidus agricoles, coproduits de l'agriculture et de l'agro-industrie) en un composé dense énergétiquement, transportable et facilement stockable permettrait de développer et consolider une filière industrielle d'énergie stationnaire (biocombustible utilisé en un point fixe, le foyer, contrairement aux biocarburants) et de réduire les impacts environnementaux (émission CO2 fossile, avec une biomasse sans fertilisants ni phytosanitaires).

Les granulés noirs sont des cylindres résistant à la dégradation par l'humidité de 1 à 3 cm de long présentant une bonne résistance mécanique permettant un stockage et une manipulation semblable à celle du charbon. Sa combustion génère peu de cendres, avec un pouvoir calorifique inférieur (PCI) proche de de 18 à 20 à joules/gramme de matière sèche.

Les granulés noirs sont produits à partir de biomasse lignocellulosique soumise à un traitement thermique, suivi d'une dépressurisation brutale qui permet de fournir un matériau à l'épreuve de l'eau pour la production de granulés ou de briquettes. La matière première est en fait explosée à la vapeur, ce qui libère des particules plus fines, permettant au matériau d'avoir une cohésion forte lors de la phase d'agrégation ou de moulage.

Le vapocraquage diffère d'un prétraitement hydrothermique, aussi appelé fractionnement aqueux, solvolyse, hydrothermolyse ou traitement hydrothermique, en ce que ce dernier consiste à utiliser de l'eau à haute température et à haute pression afin de promouvoir la désintégration et la séparation de la matrice lignocellulosique. Cette technique n'est pas adaptée à la production de granulés noirs puisque les produits obtenus sont majoritairement liquides.

Le prétraitement hydrothermique aussi appelé fractionnement aqueux, solvolyse, hydrothermolyse ou traitement hydrothermique est un procédé de prétraitement à l'eau chaude liquide utilisant de l'eau à haute température et haute pression afin de promouvoir la désintégration et la séparation de la matrice lignocellulosique.

Le vapocraquage ne peut être assimilé à une des méthodes de prétraitement hydrothermique en ce qu'il emploie une pénétration de vapeur suivit d'une décompression explosive. L'invention décrite dans la demande de brevet citée en référence utilise le système de vapocraquage dans la réalisation de ce procédé sans évoquer de système de prétraitement hydrothermique.

### Etat de la technique

On connaît dans l'état de la technique le brevet européen EP2373767B1 décrivant un procédé de fabrication discontinu de granulés noirs à partir d'un matériau contenant de la lignine.

Ce procédé comprend les étapes consistant à :
(a) faire passer le matériau contenant de la lignine ayant une teneur en humidité relative de 0 à 20 % en poids dans un réacteur ;
(b) chauffer le matériau contenant de la lignine à 180 à 235 °C en injectant de la vapeur dans le réacteur ;
(c) maintenir le matériau dans le réacteur à la température atteinte pendant 1 à 12 minutes afin de ramollir le matériau et de libérer de la lignine ;
(d) réduire la pression dans le réacteur en au moins une étape ; et
(e) former le matériau traité pour former des pastilles ou des briquettes.

Le matériau contenant de la lignine est un matériau lignocellulosique, un matériau comprenant du bois, du bambou, de la bagasse, de la paille ou de l'herbe, sous forme de copeaux d'une longueur de 25 mm. La dernière réduction de pression du réacteur a lieu de manière soudaine par explosion de vapeur de sorte que le matériau soit défibré.

Il a autrement été proposé le brevet américain US2016/251611A1 décrivant un procédé de croissance d'un organisme microbien comprenant une étape traitement thermique par vapocraquage d'une biomasse initale ligno-cellulosique. Le traitement thermique par vapocraquage comprend les étapes suivantes :
(a) La biomasse initiale subit un prétraitement hydrothermal en soumettant le matériau cellulosique à au moins une opération de trempage,
(b) puis le matériau cellulosique est transporté à travers au moins un réacteur sous pression. La matière cellulosique est alors chauffée à une température comprise entre 170 et 230 °.

Il est également connu par l'art antérieur les brevets américains US2016/153010A1 et US2012/006320A1 décrivant des procédés de conversions de la biomasse lignocellulosique en éthanol et autres produits sur la base d'un prétraitement hydrothermal continu suivi d'une hydrolyse enzymatique, d'une fermentation et d'une récupération d'éthanol. Les procédés décrivent une étape de vapocraquage comprenant:
(a) la mise en contact de la charge d'alimentation de biomasse ligno-cellulosique imprégnée d'acide avec H2O à température entre 140 et 230°C et pression entre 75 psig à environ 250 psig pour une durée de 1 à environ 15 minutes dans une zone de contact pour produire une charge traitée à la vapeur;
(b) puis la soumission de la charge traitée à la vapeur dans une zone de dépressurisation pour produire une fraction volatilisée de la charge traitée à la vapeur pour uen durée de 2 à environ 30 minutes;
C) enfin libérer au moins une partie de la fraction volatilisée de la zone de dépressurisation pour permettre le contrôle de la température et la pression dans la zone de dépressurisation.

### Inconvénients de l'art antérieur

Les solutions de l'art antérieur pour produire des granulés noirs (black pellet en anglais) sont prometteuses. Toutefois, elles présentent des limites, notamment la quantité d'énergie apportée par volume de granulé, qui bien que supérieure à la biomasse sous forme de plaquettes ou au granulé blanc ou white pellet, est encore inférieure de 30 à 40% au charbon pour le même volume ou poids.

Par ailleurs, les solutions de l'art antérieur proposent des procédés discontinus, en « batch », par des traitements séquentiels de volumes de biomasse, limitant les effets immédiats d'un contrôle des conditions de vapocraquage.

Enfin, les solutions de l'art antérieur proposent des applications différentes pour les procédés décrit tel que : un procédé de croissance d'un organisme microbien ou des procédés de conversion de la biomasse en éthanol. Elles ne présentent pas d'application pour la production de combustibles de type « granulés noirs ».

### Solution apportée par l'invention

Afin de remédier à ces inconvénients, la présente invention concerne selon son acception la plus générale un procédé de préparation en continu d'un matériau pulvérulent tel que défini dans les revendications annexées

Selon une variante, le facteur de sévérité de l'étape de vapocraquage est supérieur à 3,7 et inférieur à 4,2.

### Description détaillée d'un exemple non limitatif de l'invention

La présente invention sera mieux comprise à la lecture de la description détaillée d'un exemple non limitatif de l'invention qui suit, où la figure unique représente une vue schématique d'une installation de production en continu selon l'invention.

### Description d'un exemple de réalisation de l'installation

La figure 1 est un exemple de mode de réalisation d'une installation 10 de vapocraquage, notamment pour la fabrication d'une matière combustible selon l'invention à partir de biomasse hachée pour présenter une granulométrie comprise entre P16 et P100. Dans un mode de réalisation préféré, la biomasse présentera une granulométrie comprise entre P20 et P100, voire entre P25 et P100.

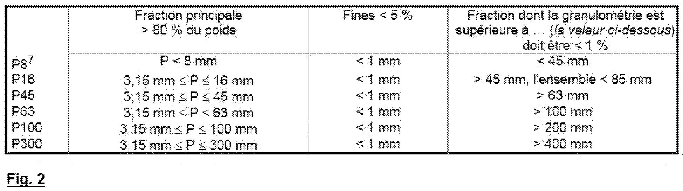

La figure 2 est un tableau représentant les caractéristiques des différentes classes de granulométrie en fonction de la nature des éléments qui composant la matière.

L'installation de vapocraquage est alimentée par de la biomasse constituée d'éléments de classe de granulométrie compris entre P16 et P100, présentant une humidité inférieure à 27%.

La granulométrie est définie par la taille des particules de la fraction principale (P) et la taille de particules définissant la fraction grossière (G). On considère que les particules de moins d'un millimètre appartiennent à la fraction fine. La fraction principale P doit représenter au moins 80 % en masse du combustible.

En fonction de la taille et du pourcentage des éléments constituants la fraction principale (P), de la fraction grossière (G) et de la fraction fine, la granulométrie des éléments de la biomasse est définie en fonction de classe de référence. Ces dernières sont préétablies par le Comité européen de normalisation (CEN/TS 14961) dans le document de la spécification technique (CEN / TS), qui sert de document normatif dans les domaines où l'état actuel de la technique n'est pas encore suffisamment stable pour une norme européenne.

Le CEN/TS précise également que 80% (en masse) du combustible doit passer entre les mailles d'un tamis correspondant à la classe de granulométrie et être retenue dans le tamis correspondant à une granulométrie de 3,15 mm. La fraction grossière G ne doit pas représenter plus de 1 % en masse. La fraction fine ne doit pas dépasser 5 % en masse.
- P16 correspond à une granulométrie avec 3.15 mm ≤ P ≤ 16 mm, et G > 45 mm
- P25 correspond à une granulométrie avec 3.15 mm ≤ P ≤ 25 mm, et G > 63 mm
- P100 correspond à une granulométrie avec 3.15 mm ≤ P ≤ 100 mm, et G > 200 mm

On peut déterminer la granulométrie d'un échantillon de plaquettes à l'aide d'un système de tamis oscillants, un tamis rotatif ou un système de mesure par imagerie.

La biomasse fait l'objet d'un déchiquetage avec des outils tranchants (couteaux de broyeurs), et est directement soumise à un traitement de vapocraquage sans humidification ou autre traitement.

Le traitement thermique de la biomasse est réalisé avec de la vapeur légèrement saturée à une température comprise entre 195°C et 215 °C. Le temps de traitement s'établit entre 5 et 30 minutes.

Le Facteur de Sévérité du traitement est défini par la formule : FS=Log10(temps(min)*exp((T°C-100) /14.75)) Plus la température est élevée et plus la durée de traitement est longue, plus la sévérité augmente et plus on constate de transformation dans le produit.

Le Pouvoir Calorifique Inferieur sur sec a augmenté en moyenne de 0,7 joules par gramme avec une variation de 0,25 à 2 joules par gramme en fonction de la sévérité du traitement thermique, en partant de 17 à 19 joules par gramme sec de bois initial, soit entre 2 et 12% de gain de PCI, autour de 4 % en moyenne. Suivant la sévérité du traitement thermique, les pertes matières se sont élevées de quelques % à 24%.

Plus la sévérité est élevée, plus la perte est importante et plus le gain de Pouvoir Calorifique Inferieur est fort. Lors du vapocraquage, ce sont essentiellement les hémicelluloses qui sont attaquées. Les principales matières volatiles solubles générées sont le furfural, l'acide acétique et l'acide formique. Ces matières volatiles solubles se retrouvent dans la vapeur sortante (« évaporats »). Suivant le type d'essence expérimenté la nature des condensats varie. Ainsi pour le chêne, c'est le furfural qui est plus important (jusqu'à 60% des COV) alors que pour le pin, c'est l'acide acétique qui est majoritaire (jusqu'à 50% des COV).

### Description de l'installation

Cette installation (10) comprend un broyeur à marteaux (11) alimenté en biomasse à l'aide d'une vis sans fin (12). Un séparateur élimine les éléments hors dimensions avant que les plaquettes n'entrent dans le broyeur (11). Dans ce broyeur humide (11), la biomasse est broyée sous la forme de fragments de granulométrie comprise entre P25 et P100.

Le remplissage du silo (13) est assuré par une chargeuse à godet qui prélève la biomasse dans des tas formés sur des zones de stockage au sol. La biomasse se déverse en sortie du broyeur (11) sur un tapis convoyeur (14), équipé d'une bande peseuse, qui les transporte vers la trémie d'alimentation d'un sécheur à air chaud (15).

Un capteur d'humidité contrôle en continu la teneur en humidité la biomasse. Les fragments biomasse sont extraits du silo (16) par une vis planétaire et déposé sur un tapis convoyeur qui les transporte jusqu'à un silo d'alimentation (17) d'un réacteur (18) permettant de traiter 15 tonnes par heure de biomasse en continu.

Le réacteur (18) est un réacteur sous pression dans lequel on injecte de la vapeur d'eau surchauffée dont la pression est de 18 bars et la température est de 250°C par sa partie inférieure. Ce réacteur orienté verticalement est de forme conique afin d'éviter la formation de bouchons. Le flux de vapeur est extrait hors du réacteur au niveau de la partie supérieure du réacteur. En sortie du réacteur, la vapeur est renvoyée vers la chaudière CH dans laquelle elle a été produite.

On notera que dans le réacteur (18) la température de la vapeur est de 203°C et la pression de 16,7 bars. Le silo (17) est en forme d'une ellipsoïde tronquée, afin de faciliter l'écoulement des fragments de biomasse.

Par ailleurs, dans le silo (17), un racleur rotatif permet de pousser les fragments de biomasse vers une vis sans fin d'extraction (19). Cette vis sans fin (19) conique, dont la section s'amenuise à mesure que la vis pénètre dans le réacteur (18), prélève en continu une quantité prédéterminée de fragments de biomasse dans le silo (17), la pré-comprime et la pousse dans le réacteur (18) sous pression au travers d'un orifice de passage de la vis. Les dimensions de l'orifice conique et de la vis ont été sélectionnées l'une par rapport à l'autre de façon à minimiser la perte de pression dans le réacteur et expulser l'air contenu dans les fragments de biomasse.

On notera que l'effort de compression exercée par la vis sur les fragments de biomasse permet avantageusement d'expulser une partie de l'eau résiduelle présente dans les fragments de biomasse.

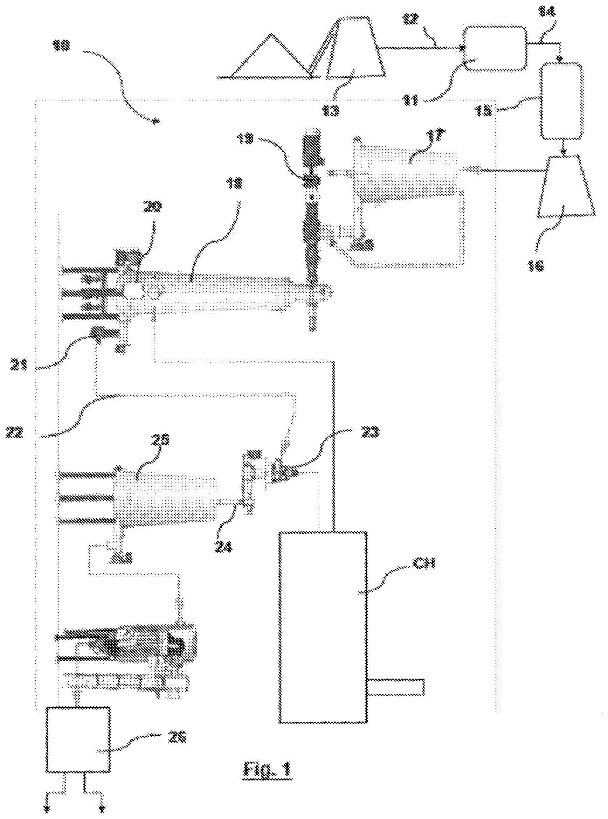

A l'extrémité de la vis (19), les fragments de biomasse compactés forment un bloc compact qui se disperse dans le réacteur sous l'effet du flux de vapeur. Les fragments de biomasse dispersés tombent alors par gravité dans le réacteur en étant réchauffés par le flux de vapeur et se déposent sur les fragments qui se sont accumulés avant eux sur le fond du réacteur, où ils continuent à être réchauffés par le flux de vapeur. Il convient de noter que dans le réacteur (18) le temps de rétention des fragments de biomasse est contrôlé en fonction du niveau des fragments de biomasse qui se sont accumulés sur le fond du réacteur. Dans ce mode de réalisation particulier de l'invention, il est fixé à 7 minutes, ce qui correspond à un facteur de sévérité de 3,8. Sur le fond du réacteur (18), un racleur monté pivotant sur un axe vertical (non représenté sur la figure 1) repousse les fragments de biomasse vers une vis sans fin (20) permettant d'extraire des fragments de biomasse du réacteur (18).

Cette vis de décharge (20) pousse les fragments de biomasse hors du réacteur vers une vanne (21) à ouverture contrôlée. L'ouverture de cette vanne est ajustée en permanence afin de contrôler le débit de fragments de biomasse extraits du réacteur en continu. Sous la poussée de la vapeur présente dans le réacteur et/ou de la vis (20), des fragments de biomasse sont expulsés en continu au travers des ouvertures des vannes (21), à très grande vitesse, dans une ligne de détente (22) et sont entraînés par le flux de vapeur sortant avec ces fragments de biomasse du réacteur dans la ligne de détente (22) jusqu'à une unité de séparation (23).

On notera que dans la ligne de détente la pression diminue progressivement jusqu'à atteindre une pression d'environ 1,1 bar au niveau du séparateur. Il se produit ainsi une décompression explosive des fragments de biomasse, du fait d'une re-vaporisation d'une partie de l'eau de condensation présente dans les fragments de biomasse. Cette expansion brutale de la vapeur d'eau entraîne l'apparition de forces de cisaillement dans l'ensemble des fragments de biomasse, qui provoque l'éclatement mécanique de la structure de ce dernier.

Dans l'unité de séparation (23), le mélange de fragments de biomasse et de vapeur pénètre tangentiellement à une pale à rotation rapide. Sous l'effet de la force centrifuge générée par cette pale, les fragments de biomasse sont projetés dans un conduit de décharge (24), tandis que la vapeur est rejetée hors du séparateur au travers d'une soupape.

Dans une variante de ce mode de réalisation de l'invention, il peut être prévu de mettre en œuvre un cyclone mis sous pression pour séparer les fragments de biomasse de la vapeur résiduelle. On notera que la vapeur rejetée contient des matières volatiles qui pourront avantageusement être brûlés dans une chaudière.

Les fragments de biomasse projetés dans un conduit de décharge (24) se déversent dans un silo de stockage (25), en vue d'être transformés sous forme de pellets de diamètre sensiblement égal à 7 millimètres et de longueur moyenne égale à 22 millimètres dans une presse à granuler (26).

### Ajustement des conditions de vapocraquage

Le fonctionnement en continu du vapocraqueur permet de réaliser un contrôle en temps réel des conditions opératoires via le facteur de sévérité.

A cet effet, on procède à une mesure des caractéristiques chimiques des effluents.

### Analyse en temps réel des effluents

La mesure en temps réel des caractéristiques chimiques des effluents permet d'évaluer les pertes en matière de la biomasse vapocraquée, se traduisant par une élévation du taux de carbone dans les effluents. Cette information peut être acquise en temps réel par une sonde infrarouge placée dans le conduit d'évacuation des effluents.

Le signal fournit en temps réel par la sonde est représentatif des variations de taux de carbone dans les effluents. Ce signal est exploité par un calculateur pour modifier les paramètres du vapocraqueur, notamment le taux de sévérité, en fonction d'une fonction prédéterminée par les objectifs visés : par exemple maximisation du PCI.

La sonde permet aussi d'analyser les autres composés organiques, notamment oxygénés, et fournir une information cartographique des composés organiques des effluents en vue de piloter les paramètres de vapocraquage.

### Application de granulation

Pour la production de combustibles granulés présentant si possible un degré d'humidité inférieur à 10%, l'humidité du produit final, avant granulation, doit être maîtrisée.

A cet effet, la biomasse initiale, avant vapocraquage, présente un taux d'humidité faible, notamment inférieur 14% et de préférence inférieur à 10%.

Alternativement, la biomasse initiale peut être vapocraquée avec un degré d'humidité supérieur à 14%, mais inférieur à 27%. Dans ce cas, une étape de séchage de la biomasse vapocraquée est prévue en aval de l'installation de vapocraquage, avant ou après granulation.

## Revendications

1. - Procédé de préparation en continu d'un matériau pulvérulent présentant un pouvoir calorifique supérieur au pouvoir calorifique de la biomasse avant vapocraquage comportant une étape de vapocraquage , ladite biomasse avant vapocraquage étant constituée d'éléments de classe de granulométrie compris entre P16 et P100, présentant une humidité inférieure à 27% et étant directement soumis à un traitement de vapocraquage à une température comprise entre 195°C et 215 °C durant 5 et 30 minutes **caractérisé en ce que** le facteur de sévérité de l'étape de vapocraquage est piloté en fonction du taux de carbone dans les effluents gazeux, ledit taux de carbone étant exploité en temps réel par un calculateur pour modifier le taux de sévérité, en fonction d'une fonction prédéterminée pour maximiser le PCI.

2. - Procédé de préparation en continu d'un matériau pulvérulent selon la revendication 1 **caractérisé en ce que** le facteur de sévérité de l'étape de vapocraquage est supérieur à 3,7 et inférieur à 4,2.

3. - Procédé de préparation en continu d'un matériau pulvérulent selon l'une des revendications précédentes, comprenant une étape de granulation de la biomasse pour la préparation de combustibles granulés.

## Patentansprüche

1. Verfahren zum kontinuierlichen Herstellen eines pulverförmigen Materials, das einen Heizwert aufweist, der höher ist als der Heizwert der Biomasse vor Dampfcracken, umfassend einen Dampfcracking-Schritt, wobei die Biomasse vor Dampfcracken aus Elementen mit einer Korngrößenklasse zwischen P16 und P100 besteht, die eine Feuchtigkeit von weniger als 27 % aufweisen und direkt einer Dampfcracking-Behandlung bei einer Temperatur zwischen 195 °C und 215 °C über 5 und 30 Minuten unterzogen werden, **dadurch gekennzeichnet, dass** der Härtefaktor des Dampfcracking-Schritts abhängig von dem Kohlenstoffgehalt in den Abgasen gesteuert wird, wobei der Kohlenstoffgehalt in Echtzeit von einem Rechner ausgewertet wird, um den Härtefaktor abhängig von einer vorbestimmten Funktion zum Maximieren des PCI zu modifizieren.

2. Verfahren zum kontinuierlichen Herstellen eines pulverförmigen Materials nach Anspruch 1, **dadurch gekennzeichnet, dass** der Schwerefaktor des Dampfcracking-Schritts größer als 3,7 und kleiner als 4,2 ist.

3. Verfahren zum kontinuierlichen Herstellen eines pulverförmigen Materials nach einem der vorstehenden Ansprüche, umfassend einen Granulierungsschritt der Biomasse zum Herstellen von granulierten Brennstoffen.

## Claims

1. Method for continuously preparing a powder material having a calorific value which is more than the calorific value of the biomass before steam cracking, the method comprising a steam cracking step, the biomass before steam cracking consisting of elements having a particle size class of between P16 and P100, exhibiting a moisture content of less than 27% and being directly subjected to a steam cracking treatment at a temperature of between 195°C and 215°C for 5 and 30 minutes, **characterized in that** the severity factor of the steam cracking step is controlled as a function of the carbon content in the gaseous effluents, the carbon content being used in real time by a computer to modify the severity rate as a function of a predetermined function to maximize the PCI.

2. Method for continuously preparing a powder material according to claim 1, **characterized in that** the severity factor of the steam cracking step is more than 3.7 and less than 4.2.

3. Method for continuously preparing a powder material according to either of the preceding claims, comprising a step of granulating the biomass to prepare pellet fuels.
